(19) Europäisches Patentamt
European Patent Office
Office européen des brevets

(11) **EP 3 817 467 B1**

(12) **EUROPEAN PATENT SPECIFICATION**

(45) Date of publication and mention
of the grant of the patent:
**04.10.2023 Bulletin 2023/40**

(21) Application number: **18928792.3**

(22) Date of filing: **01.08.2018**

(51) International Patent Classification (IPC):
**H04W 64/00** (2009.01)     **H04W 4/33** (2018.01)
**G01S 5/02** (2010.01)

(52) Cooperative Patent Classification (CPC):
**H04W 64/006; H04W 4/025; H04W 4/33;**
**G01S 5/02525**

(86) International application number:
**PCT/CN2018/098054**

(87) International publication number:
**WO 2020/024156 (06.02.2020 Gazette 2020/06)**

(54) **METHOD FOR CONSTRUCTING VERTICAL POSITIONING MODEL, AND VERTICAL POSITIONING METHOD AND DEVICE**

VERFAHREN ZUR KONSTRUKTION EINES MODELLS ZUR VERTIKALEN POSITIONIERUNG UND VERFAHREN UND VORRICHTUNG ZUR VERTIKALEN POSITIONIERUNG

PROCÉDÉ PERMETTANT DE CONSTRUIRE UN MODÈLE DE POSITIONNEMENT VERTICAL ET PROCÉDÉ ET DISPOSITIF DE POSITIONNEMENT VERTICAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.05.2021 Bulletin 2021/18**

(73) Proprietor: **HUAWEI TECHNOLOGIES CO., LTD.**
**Shenzhen, Guangdong 518129 (CN)**

(72) Inventors:
• **WU, Jihao**
  **Shenzhen, Guangdong 518129 (CN)**
• **CHEN, Yongwei**
  **Shenzhen, Guangdong 518129 (CN)**
• **CHEN, Jiehua**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A1- 3 054 310        CN-A- 102 186 238**
**CN-A- 107 005 810        CN-A- 107 018 495**
**US-B1- 8 165 599**

• **CHEN DENG ET AL: "A fine-grained indoor localization using multidimensional Wi-Fi fingerprinting", 2014 20TH IEEE INTERNATIONAL CONFERENCE ON PARALLEL AND DISTRIBUTED SYSTEMS (ICPADS), IEEE, 16 December 2014 (2014-12-16), pages 494-501, XP032771397, DOI: 10.1109/PADSW.2014.7097846 [retrieved on 2015-04-29]**

**Description**

**TECHNICAL FIELD**

Embodiments of this application relate to the communications field, and in particular, to methods, a computer and a network device for constructing a vertical positioning model, a vertical positioning method, and an apparatus.

**BACKGROUND**

With rapid development of the mobile internet and popularization of intelligent terminals, China Telecom and China Mobile obtain location information of a mobile terminal user by using a radio communications network or in an external positioning manner, and then provide, for the user based on the location information of the mobile terminal, a value-added service of a corresponding service. Therefore, a location based service (location based service, LBS) receives great attention. A key to implementing the LBS is a positioning technology.

In the prior art, in a barometer-based vertical positioning technology, a change of an atmospheric pressure around a measured terminal is obtained, then a change of an altitude of a location of the measured terminal is determined based on the change of the atmospheric pressure, and finally an altitude of the measured terminal is determined. The altitude, determined by using a barometer, of the measured terminal is a relative altitude, and an absolute altitude needs to be obtained through calculation by using a temperature and the atmospheric pressure.

However, through barometer-based vertical positioning, a measured terminal side can obtain a specific position of the measured terminal, but a wireless network side cannot obtain a vertical position of the measured terminal. Additional prior art exists in form of EP 3 054 310 A1 which discloses a method for providing an indoor location of a mobile device, the mobile device having satellite navigation capabilities so that it is capable of reporting GNSS location information, the method comprising: upon detecting that the mobile device has stopped reporting its GNSS location information determining: i) whether a signal level value obtained from the signal levels reported by the mobile device from the serving cell and neighbouring cells has decreased more than a predefined amount of decibels during a first time window since the last GNNS location information was reported; and ii) whether the last reported GNSS location information was less than a predefined distance from a building; and using the position coordinates of such building as the location of the mobile device when both conditions i) and ii) are met. US 8 165 599 B1 further teaches that a location of a mobile station is estimated based on wireless communications between the mobile station and a wireless telecommunications network. Call measurement data is obtained for a call involving the mobile station and a plurality of base station antennas. The call measurement data includes round-trip delay (RTD) measurements and received signal strength (RSS) measurements. The most significant one or more base station antennas involved in the call are identified. An expected signal strength is calculated for each significant base station antenna, according to a wireless propagation model that accounts for terrain around the base station antennas. For each significant base station antenna, the corresponding expected signal strength, RTD measurement, and RSS measurement are used to calculate an adjusted RTD value. The one or more adjusted RTD values calculated for the one or more significant base station antennas are used to estimate the mobile station's location.

**SUMMARY**

The invention provides a method for constructing a vertical positioning model, a vertical positioning method, a computer and a network device to enable a network device to obtain vertical information of a mobile terminal based on a vertical positioning model, thereby improving efficiency of obtaining the vertical information of the mobile terminal by the network device.

The invention is defined in the appended set of claims.

**BRIEF DESCRIPTION OF DRAWINGS**

FIG. 1 is a schematic diagram of an application scenario according to an embodiment of this application;
FIG. 2 is a schematic flowchart of a method for constructing a vertical positioning model according to an embodiment of this application;
FIG. 3 is a schematic flowchart of another method for constructing a vertical positioning model according to an embodiment of this application;
FIG. 4 is a diagram of a clustered round test area according to an embodiment of this application;
FIG. 5 is a schematic flowchart of a vertical positioning method according to an embodiment of this application;

FIG. 6 is a schematic flowchart of another vertical positioning method according to an embodiment of this application;

FIG. 7 is a schematic block diagram of a computer device according to an embodiment of this application;

FIG. 8 is a schematic block diagram of a network device according to an embodiment of this application; and

FIG. 9 is a schematic diagram of a hardware structure of a computer device according to an embodiment of this application.

## DESCRIPTION OF EMBODIMENTS

The following clearly and completely describes the technical solutions in embodiments of this application with reference to the accompanying drawings in the embodiments of this application. It is clear that the described embodiments are merely some but not all of the embodiments of this application.

In the specification, claims, and the accompanying drawings of this application, the terms "first", "second", "third", "fourth", and the like (if existent) are intended to distinguish between similar objects, but do not necessarily indicate a specific order or sequence. It should be understood that, data used in such a way is interchangeable in proper circumstances, so that the embodiments described herein can be implemented in other orders than the order illustrated or described herein. In addition, the terms "include", "have" and any other variants thereof mean to cover non-exclusive inclusion, for example, a process, method, system, product, or device that includes a list of steps or units is not necessarily limited to those steps or units, but may include other steps or units not expressly listed or inherent to the process, method, system, product, or device.

Embodiments of this application provide a method for constructing a vertical positioning model, a vertical positioning method, and an apparatus, to enable a network device to obtain vertical information of a mobile terminal based on a vertical positioning model, thereby improving efficiency of obtaining the vertical information of the mobile terminal by the network device.

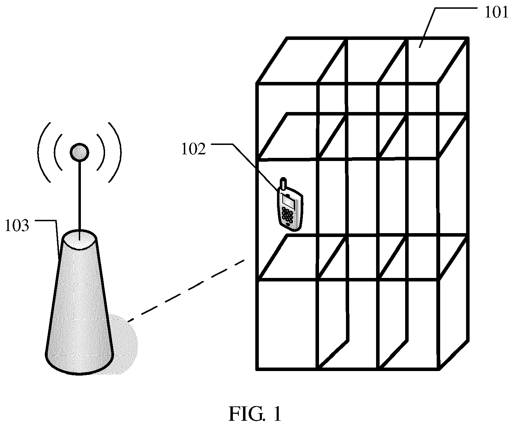

FIG. 1 is a schematic diagram of an application scenario according to an embodiment of this application. The application scenario includes a building 101, a mobile terminal 102, and a network device 103. The network device 103 includes a vertical positioning model. The vertical positioning model is obtained by training measurement reports (measure report, MR) uploaded by the mobile terminal 102 and a round test signature feature of the building 101. In this embodiment of this application, the network device 103 obtains target MRs of the mobile terminal 102, and may obtain vertical information of the mobile terminal 102 based on the target MRs.

It should be noted that, the MR in the embodiments of this application is information periodically reported in a report form by a mobile terminal to a network device at a specified time interval on a traffic channel by using a control channel. The information may be, for example, uplink level strength of a cell in which the mobile terminal is located, quality, current transmit power of a BTS, a DTX usage status, and a TA value. The network device uploads, to a server, downlink information reported by the mobile terminal and uplink physical information collected by the network device, and the server collects the information and performs statistics of the information.

The foregoing describes the schematic diagram of the application scenario in the embodiments of this application. The following separately describes a method for constructing a vertical positioning model and a vertical positioning method in the embodiments of this application.

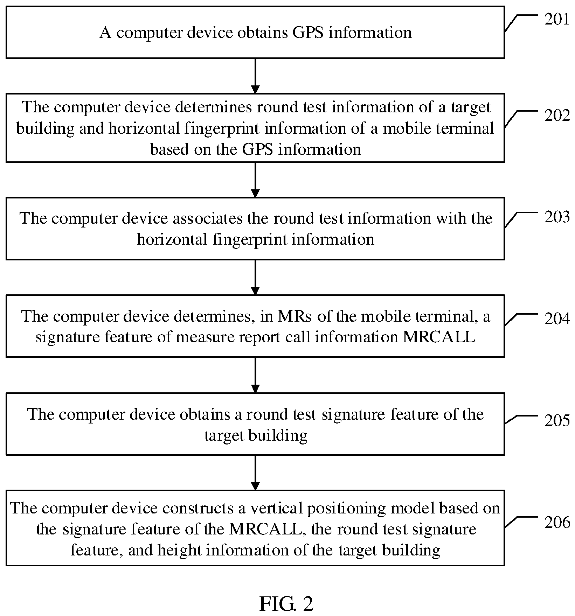

FIG. 2 is a schematic flowchart of a method for constructing a vertical positioning model according to an embodiment of this application. As shown in FIG. 2, the method for constructing a vertical positioning model according to this embodiment of this application may include the following steps:

201. A computer device obtains GPS information.

The computer device obtains the GPS information reported by a mobile terminal.

202. The computer device determines round test information of a target building and horizontal fingerprint information of the mobile terminal based on the GPS information.

The computer device obtains, by using a minimization of drive tests (minimization of drive test, MDT) protocol, the GPS information reported by the mobile terminal, to obtain MDT information. It should be noted that, in this embodiment, the MDT information may be information about the bottom of the target building, or may be information about the top of the target building. This is not limited herein. In this embodiment, only the MDT information of the bottom of the target building is used as an example for description.

The computer device constructs the round test information of the target building based on the MDT information. The round test information includes proportions of cells in the target building. The round test information of the target building may be shown in Table 2-1.

**Table 2-1 Round test information**

| Target building ID | Proportion of a cell 1 | Proportion of a cell 2 | Proportion of a cell 3 | ... |
|---|---|---|---|---|
| Target building 1 | 20 | 30 | 50 | ... |

(continued)

| Target building ID | Proportion of a cell 1 | Proportion of a cell 2 | Proportion of a cell 3 | ... |
|---|---|---|---|---|
| Target building 2 | 25 | 25 | 40 | ... |
| Target building 3 | 40 | 15 | 30 | ... |

It should be noted that, in this embodiment, only the proportions of the cell 1, the cell 2, and the cell 3 are described as an example. In an actual application, a proportion of another cell may further be included.

It should be noted that, the target building in this embodiment has height information. Specifically, the computer device may determine, in a 3D electronic map based on a target building ID, height information of a corresponding building. The 3D electronic map in this embodiment may be a vector map, with a height, in a PLANET format. In the 3D electronic map, the target building is managed by using a polygon POLYGON method, and each target building has corresponding height information.

The computer device may further determine the horizontal fingerprint information of the mobile terminal based on the MDT information. The horizontal fingerprint information is used to represent a horizontal location of the mobile terminal. For details about the horizontal fingerprint information, refer to Table 2-2.

**Table 2-2 Horizontal fingerprint information**

| MR | Longitude | Latitude | Cell ID | Whether a cell is a primary serving cell | Cell rank |
|---|---|---|---|---|---|
| MR 1 | 22° | 113° | 1 | Yes | 1 |
| MR 2 | 30° | 119° | 2 | Yes | 2 |
| MR 3 | 25° | 125° | 3 | Yes | 3 |

It should be noted that, the horizontal fingerprint information is horizontal fingerprint information corresponding to the mobile terminal when the mobile terminal reports an MR to the computer device in a call process. For example, when the computer device obtains the MR 1 reported by the mobile terminal, the horizontal fingerprint information of the mobile terminal includes longitude=22°, latitude=113°, and the like.

It should be noted that, in this embodiment, the computer device may alternatively obtain AGPS information by using an assisted global positioning system (assisted global positioning system, AGPS) protocol, and construct the round test information of the target building or the horizontal fingerprint information of the mobile terminal by using the AGPS information. This is not limited herein.

203. The computer device associates the round test information with the horizontal fingerprint information.

The computer device determines, in the 3D electronic map, a longitude and a latitude of a building, and associates the longitude and the latitude of the building with the longitude and the latitude in the horizontal fingerprint information. To be specific, the computer device associates the horizontal fingerprint information with the round test information, to associate the horizontal fingerprint information with the target building.

Specifically, the computer device separately obtains, from the 3D electronic map, longitudes and latitudes of a building 1, a building 2, and a building 3. The longitudes and the latitudes of the building 1, the building 2, and the building 3 are shown in Table 2-3.

**Table 2-3 Longitude and latitude of buildings**

| Building ID | Longitude | Latitude |
|---|---|---|
| Building 1 | 22° | 113° |
| Building 2 | 30° | 119° |
| Building 3 | 25° | 125° |

After determining the longitude and latitude of the building, the computer device associates the horizontal fingerprint information with the building, and manages MRs for each building. Specifically, it can be learned based on Table 2-1 and Table 2-3 that, the longitude and the latitude, in the fingerprint information, corresponding to the MR 1 correspond to the longitude and the latitude of the building 1, the longitude and the latitude, in the fingerprint information, corresponding to the MR 2 correspond to the longitude and the latitude of the building 2, and the longitude and the latitude, in the fingerprint information, corresponding to the MR 3 correspond to the longitude and the latitude of the building 3.

It may be understood that, after associating the round test information with the horizontal fingerprint information, the computer device may determine a target building corresponding to the measurement report. That is, the computer device may determine a target building in which the mobile terminal is located when the mobile terminal reports the MR.

204. The computer device determines, in MRs of the mobile terminal, a signature feature of measurement report call information MRCALL.

The computer device obtains a quantity of MRs of the mobile terminal in one call. Each of the MRs includes cell information. The computer device determines, in the cell information, a signature feature of MRCALL in this call. For example, the computer device determines that the mobile terminal uploads two MRs in one call, where IDs of cells included in the first MR are separately 1, 2, and 5, and IDs of cells included in the second MR are separately 1 and 4. In this case, a signature feature of MRCALL of the mobile terminal in this call is shown in Table 2-4.

Table 2-4 Signature feature of MRCALL

| Cell ID | 1 | 2 | 3 | 4 | 5 | 6 | 7 |
|---|---|---|---|---|---|---|---|
| Signature feature of MRCALL (%) | 40 | 20 | 0 | 20 | 20 | 0 | 0 |

205. The computer device obtains a round test signature feature of the target building.

In this embodiment, the target building is a building corresponding to the MR. To be specific, a longitude and a latitude in the horizontal fingerprint information of the MR correspond to a longitude and a latitude of the target building.

Specifically, the computer device determines, based on the MR, a building in which the mobile terminal is currently located, and then determines the round test signature feature of the target building by using the round test information. For example, for the round test signature feature, refer to Table 2-5.

**Table 2-5 Round test signature feature**

| Cell ID | 1 | 2 | 3 | 4 | 5 | 6 | 7 |
|---|---|---|---|---|---|---|---|
| Round test signature feature (%) | 70 | 0 | 0 | 20 | 10 | 0 | 0 |

206. The computer device constructs a vertical positioning model based on the signature feature of the MRCALL, the round test signature feature, and height information of the target building.

The computer device constructs the vertical positioning model by using a vector product algorithm. The vertical positioning model is used to measure vertical information of a measured mobile terminal. Specifically, the computer device calculates a vector product RETV based on the signature feature of the MRCALL and the round test signature feature. For example, it can be learned based on Table 2-4 and Table 2-5 that, the RETV is 0.4 * 0.7 + 0.2 * 0.2 + 0.2 * 0.1, that is, the RETV is 0.34.

It should be noted that, in this embodiment, the RETV is used to represent a similarity between the round test signature feature and the signature feature of the MRCALL. A smaller value of the RETV indicates a higher location of the mobile terminal, and a larger value of the RETV indicates a lower location of the mobile terminal.

It may be understood that, the computer device may obtain signature features of MRCALL of different mobile terminals and round test signature features of different target buildings, thereby obtaining a large quantity of RETVs. Then the computer device determines, in the large quantity of RETVs, an RETV with a smallest value and an RETV with a largest value. The RETV with the smallest value is denoted as *min* ($RTEV$), and the RETV with the largest value is denoted as *max* ($RTEV$).

The computer device may obtain a slope $k_1$ of a linear equation in a straight line equation (2-1) based on min($RETV$), max($RTEV$), and the height information of the target building.

$$(h_{building} - 0) = k_1[\min(RETV) - \max(RTEV)] \quad \text{(2-1)}$$

$h_{building}$ is a height of the target building corresponding to the round test signature feature, and $k_1$ is the slope of the linear equation.

After obtaining the slope $k_1$ of the linear equation, the computer device constructs a vertical positioning model in which (2-2) is used as a calculation formula. To be specific, the vertical positioning model is:

$$h_{mr} = k_1[RTEV - \max(RTEV)] \quad \text{(2-2)}$$

$h_{mr}$ is a height of a measured mobile terminal, and *RT EV* is a vector product of the measured mobile terminal. It may be understood that, by using the vertical positioning model, as long as a signature feature of MRCALL of the measured mobile terminal is obtained, vertical information of the measured mobile terminal may be obtained by using the vertical positioning model ($h_{mr} = k_1[RTEV - \max(RTEV)]$).

In this embodiment, the computer device obtains the round test signature feature of the target building by using the GPS information uploaded by the mobile terminal, determines the signature feature of the MRCALL based on the MRs reported by the mobile terminal, and then constructs the vertical positioning model in combination with the height information of the target building in the 3D electronic map. The vertical positioning model is used to measure the vertical information of the measured mobile terminal. Therefore, in this embodiment, the computer device may construct, based on the signature feature of the MRCALL, the round test signature feature, and the 3D electronic map, the vertical positioning model used to measure the measured mobile terminal, thereby improving efficiency of obtaining a vertical position of the mobile terminal by a network device.

The foregoing describes the method for constructing a vertical positioning model in the embodiments of this application. The following describes another method for constructing a vertical positioning model in the embodiments of this application.

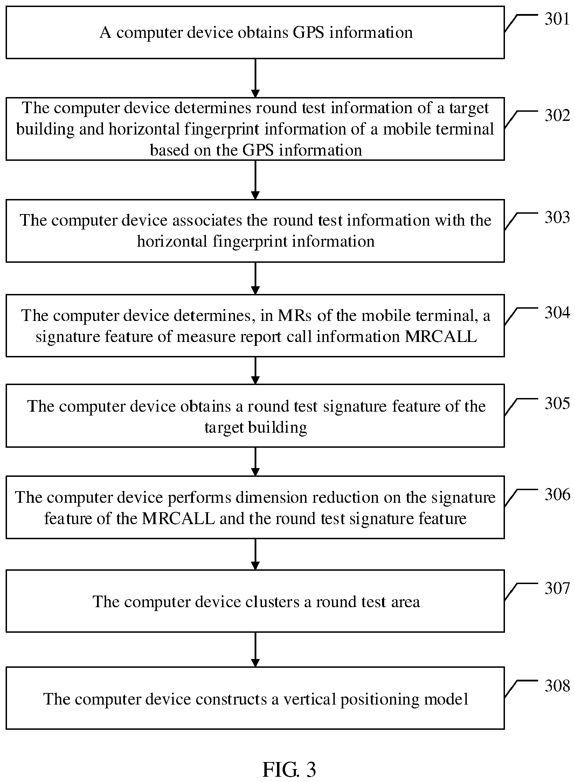

FIG. 3 is a schematic flowchart of another method for constructing a vertical positioning model according to an embodiment of this application. As shown in FIG. 3, the another method for constructing a vertical positioning model according to this embodiment of this application may include the following steps:

301. A computer device obtains GPS information.

302. The computer device determines round test information of a building and horizontal fingerprint information of a mobile terminal based on the GPS information.

303. The computer device associates the round test information with the horizontal fingerprint information.

304. The computer device determines, in MRs of the mobile terminal, a signature feature of measurement report call information MRCALL.

305. The computer device obtains a round test signature feature of the target building.

In this embodiment, steps 301 to 305 are similar to steps 201 to 205 in the embodiment corresponding to FIG. 2. Details are not described herein again.

306. The computer device performs dimension reduction on the signature feature of the MRCALL and the round test signature feature.

After obtaining the signature feature of the MRCALL and the round test signature feature, the computer device separately performs dimension reduction on the round test signature feature and the signature feature of the MRCALL. For example, the computer device separately reduces the round test signature feature and the signature feature of the MRCALL to two dimensions. For a dimension-reduced round test signature feature, refer to Table 3-1.

**Table 3-1 Dimension-reduced round test signature feature**

| Dimension | First dimension | Second dimension |
|---|---|---|
| Round test signature feature | 4.56 | 3.28 |

For a dimension-reduced signature feature of the MRCALL, refer to Table 3-2.

**Table 3-2 Dimension-reduced signature feature of MRCALL**

| Dimension | First dimension | Second dimension |
|---|---|---|
| Signature feature of MRCALL | 3.25 | 1.25 |

It should be noted that, in this embodiment, the computer device may alternatively reduce a round test area to five dimensions or another quantity of dimensions. This is not specifically limited herein.

307. The computer device clusters a round test area.

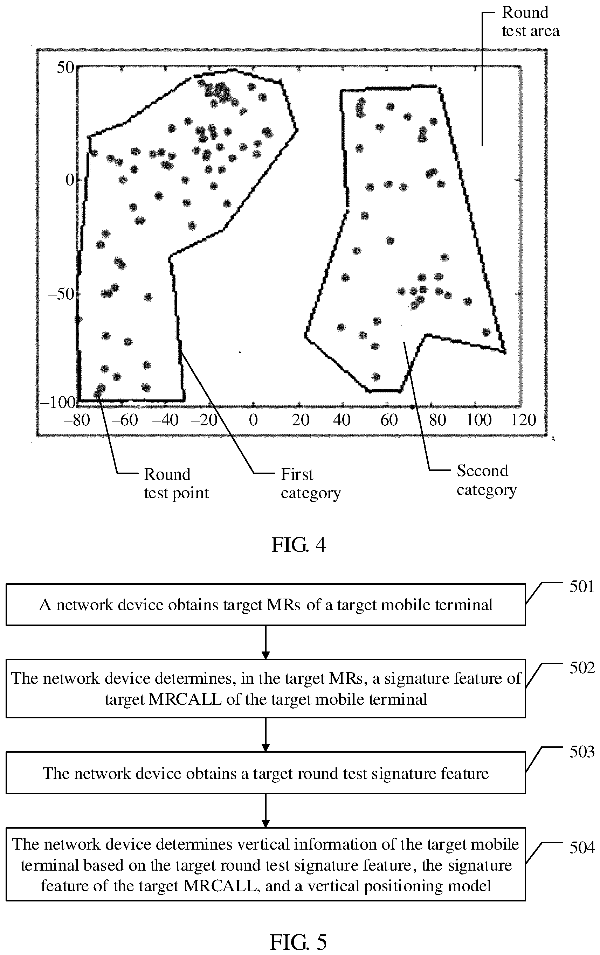

The computer device clusters the round test area based on round test points in the round test area. For example, the computer device may classify the round test area into two categories. FIG. 4 is a diagram of a clustered round test area. As shown in FIG. 4, a computer device classifies the round test area into two categories. The two categories are separately a first category and a second category. Each of the first category and the second category includes round test points. The round test points may be target buildings.

308. The computer device constructs a vertical positioning model.

The computer device calculates a dimension-reduced Euclidean distance D: $(4.56 - 3.25)^2 + (3.28 - 1.25)^2 = 5.837$ based on Table 3-1 and Table 3-2. The Euclidean distance D is used to represent a similarity between the signature feature of the MRCALL and the round test signature feature. A larger D indicates a higher location of the mobile terminal, and a smaller D indicates a lower location of the mobile terminal.

The computer device separately constructs a vertical positioning model for the first category and a vertical positioning model for the second category.

Specifically, the computer device determines, based on the MRs reported by the mobile terminal, a category to which a round test area corresponding to a building in which a target mobile terminal is currently located belongs. Then the computer device trains, by using MRs of a mobile terminal whose round test area belongs to the first category, the vertical positioning model corresponding to the first category, and trains, by using MRs of a mobile terminal whose round test area belongs to the second category, the vertical positioning model corresponding to the second category.

For the vertical positioning model corresponding to the first category, the computer device may continuously obtain dimension-reduced signature features of MRCALL of mobile terminals belonging to the first category and round test signature features of target buildings belonging to the first category, to obtain a large quantity of distances D. Then the computer device determines, in the large quantity of distances D, a distance D with a smallest value and a distance D with a largest value. The distance D with the smallest value is denoted as min $(D_{class1})$, and the distance D with the largest value is denoted as max $(D_{class1})$. The computer device obtains a slope $k_2$ of a linear equation in a straight line equation (3-1) based on min$(D_{class1})$ , max$(D_{class1})$, and height information of the target building. class is a clustering label. class1 is a clustering label corresponding to the first category.

$$(h_{building} - 0) = k_2[\max(D_{class1}) - \min(D_{class1})] \quad \text{(3-1)}$$

$h_{building}$ is a height of the target building corresponding to the round test signature feature, and $k_2$ is the slope of the linear equation.

After obtaining the slope $k_2$ of the linear equation, the computer device constructs a vertical positioning model in which (3-2) is used as a calculation formula. To be specific, the vertical positioning model is:

$$h_{mr} = k_2[D_{class1} - \min(D_{class1})] \quad \text{(3-2)}$$

$h_{mr}$ is a height of a measured mobile terminal, and $D_{class1}$ is a Euclidean distance of the measured mobile terminal. It may be understood that, by using the vertical positioning model, as long as a category of a round test area of the measured mobile terminal and a signature feature of MRCALL of the measured mobile terminal are determined, vertical information of the measured mobile terminal may be obtained by using the vertical positioning model ($h_{mr} = k_2[D_{class1} - \min(D_{class1})]$).

For the vertical positioning model corresponding to the second category, the computer device may continuously obtain dimension-reduced signature features of MRCALL of mobile terminals belonging to the second category and round test signature features of target buildings belonging to the second category, to obtain a large quantity of distances D. Then the computer device determines, in the large quantity of distances D, a distance D with a smallest value and a distance D with a largest value. The distance D with the smallest value is denoted as min$(D_{class2})$, and the distance D with the largest value is denoted as max $(D_{class2})$. The computer device obtains a slope $k_3$ a of a linear equation in a straight line equation (3-3) based on min$(D_{class2})$, max$(D_{class2})$, and height information of the target building. class is a clustering label. class2 is a clustering label corresponding to the first category.

$$(h_{building} - 0) = k_3[\max(D_{class2}) - \min(D_{class2})] \quad \text{(3-3)}$$

$h_{building}$ is a height of the target building corresponding to the round test signature feature, and $k_3$ is the slope of the linear equation.

After obtaining the slope $k_3$ of the linear equation, the computer device constructs a vertical positioning model in which (3-4) is used as a calculation formula. To be specific, the vertical positioning model is:

$$h_{mr} = k_3[D_{class2} - \min(D_{class2})] \quad \text{(3-4)}$$

$h_{mr}$ is vertical information of a measured mobile terminal, and $D_{class2}$ is a Euclidean distance of the measured mobile terminal. It may be understood that, by using the vertical positioning model, as long as a category of a round test area of the measured mobile terminal and a signature feature of MRCALL of the measured mobile terminal are determined, vertical information of the measured mobile terminal may be obtained by using the vertical positioning model ($h_{mr} = $

$k_3[D_{class2}$ - $\min(D_{class2})]$).

In this embodiment, the computer device constructs the vertical positioning model by using the dimension-reduced round test signature feature, the dimension-reduced signature feature of the MRCALL, and the height information of the target building. Therefore, in this embodiment, the vertical positioning model may be constructed based on the category of the round test area, so that precision of the vertical positioning model is improved, thereby improving efficiency of obtaining the vertical information of the measured terminal.

The foregoing describes the methods for constructing a vertical positioning model in the embodiments of this application. The following describes a method for constructing a vertical positioning model in the embodiments of this application.

FIG. 5 is a schematic flowchart of a vertical positioning method according to an embodiment of this application. As shown in FIG. 5, the vertical positioning method according to this embodiment of this application may include the following steps:

501. A network device obtains target MRs of a target mobile terminal.

In a call process, the target mobile terminal uploads the target MRs to the network device. The target MRs include cell information. To be specific, the target MRs include quantities of times for which cells appear in this call of the target mobile terminal. For example, the target mobile terminal uploads two target MRs to the network device in this call. IDs of cells included in the first MR are separately 1, 3, and 5. IDs of cells included in the second MR are separately 1, 4, and 5.

It should be noted that, in this embodiment, the target mobile terminal is a measured mobile terminal.

502. The network device determines, in the target MRs, a signature feature of target MRCALL of the target mobile terminal.

The network device determines a signature feature of target MRCALL of a mobile terminal based on the target MRs uploaded by the target mobile terminal. Specifically, the network device determines the signature feature of the target MRCALL based on the cell information included in the target MRs. For example, the signature feature of the target MRCALL is obtained through calculation based on the IDs, of the cells included in the first MR, that are separately 1 and 5 and the IDs, of the cells included in the second MR, that are separately 1, 4, and 5. For the signature feature of the target MRCALL, refer to Table 5-1.

**Table 5-1 Signature feature of target MRCALL**

| Cell ID | 1 | 2 | 3 | 4 | 5 | 6 | 7 |
|---|---|---|---|---|---|---|---|
| Signature feature of target MRCALL (%) | 40 | 0 | 0 | 20 | 40 | 0 | 0 |

503. The network device obtains a target round test signature feature.

The network device obtains a target round test signature feature of a building in which the mobile terminal is located when the mobile terminal reports a target MR. Specifically, the network device determines horizontal fingerprint information of the target mobile terminal based on the target MR, and then determines, based on the horizontal fingerprint information, a target building corresponding to the horizontal fingerprint information. Round test information of the target building is the target round test signature feature, that is, a round test signature feature of the building in which the target mobile terminal is currently located. For example, for the target round test information, refer to Table 5-2.

**Table 5-2 Target round test signature feature**

| Cell ID | 1 | 2 | 3 | 4 | 5 | 6 | 7 |
|---|---|---|---|---|---|---|---|
| Target round test signature feature (%) | 30 | 10 | 0 | 10 | 50 | 0 | 0 |

504. The network device determines vertical information of the target mobile terminal based on the target round test signature feature, the signature feature of the target MRCALL, and a vertical positioning model.

The network device obtains a target RETV by using a vector product algorithm. Specifically, the network device may obtain the target RETV based on the target round test signature feature and the signature feature of the target MRCALL, for example, based on Table 5-1 and Table 5-2. To be specific, the target RETV is 0.3 * 0.4 + 0.2 * 0.1 + 0.4 * 0.5 = 0.34.

After obtaining the target RETV, the network device substitutes the target RETV into RETV in a vertical positioning model ($h_{mr} = k_1[RTEV-\max(RTEV)]$), to obtain vertical information $h_{mr}$ of the target mobile terminal.

Optionally, in this embodiment, the network device may further compare the target RETV with $\min(RTEV)$ and $\max(RTEV)$ in the vertical positioning model. If a difference between the target RETV and $\min(RETV)$ is less than a preset threshold, or a difference between the target RETV and $\max(RTEV)$ is less than a preset threshold, the network device updates the vertical positioning model or reconstructs the vertical positioning model.

In this embodiment, the network device obtains the target MRs uploaded by the measured mobile terminal, determines the target MRCALL based on the target MRs, and determines the target round test signature feature. Then the network device obtains the vertical information of the measured mobile terminal based on the target MRCALL, the target round test signature feature, and the vertical positioning model. Therefore, in this embodiment, the network device can obtain the vertical information of the target mobile terminal through detection as long as the network device obtains the target MRs uploaded by the measured mobile terminal, thereby improving efficiency of obtaining the vertical information of the target mobile terminal by the network device.

The foregoing describes the method for constructing a vertical positioning model in the embodiments of this application. The following describes another method for constructing a vertical positioning model in the embodiments of this application.

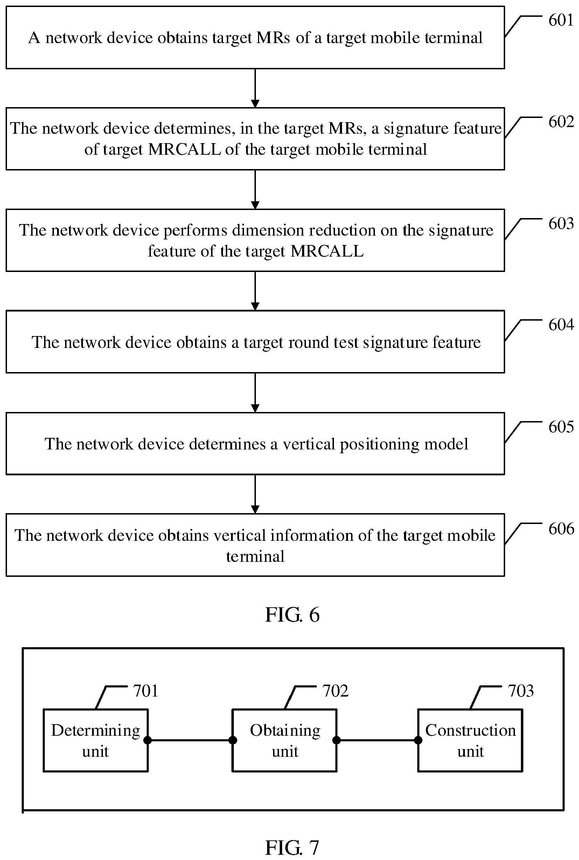

FIG. 6 is a schematic flowchart of a vertical positioning method according to an embodiment of this application. As shown in FIG. 6, the vertical positioning method according to this embodiment of this application may include the following steps:

601. A network device obtains target MRs of a target mobile terminal.

602. The network device determines, in the target MRs, a signature feature of target MRCALL of the target mobile terminal.

In this embodiment, steps 601 and 602 are similar to steps 501 and 502 in the embodiment corresponding to FIG. 2. Details are not described herein again.

603. The network device performs dimension reduction on the signature feature of the target MRCALL.

After obtaining the signature feature of the target MRCALL, the network device performs dimension reduction on the signature feature of the target MRCALL. For example, the network device may reduce the signature feature of the target MRCALL to two dimensions. A signature feature, reduced to two dimensions, of the target MRCALL may be shown in Table 6-1.

**Table 6-1 Dimension-reduced signature feature of target MRCALL**

| Dimension | First dimension | Second dimension |
|---|---|---|
| Signature feature of MRCALL | 3.54 | 4.88 |

604. The network device obtains a target round test signature feature.

The network device obtains, from a database through matching, the target round test signature feature corresponding to the target MRs. The target round test signature may be a dimension-reduced round test signature feature. The dimension-reduced round test signature feature may be shown in Table 6-2.

**Table 6-2 Target round test signature feature**

| Dimension | First dimension | Second dimension |
|---|---|---|
| Target round test signature feature | 1.84 | 2.58 |

605. The network device determines a vertical positioning model.

After obtaining a target MR, the network device determines, based on information included in the target MR, a round test area in which the network device is currently located. The round test area includes a first category and a second category. If it is determined that the area in which the target mobile terminal is currently located belongs to the first category, it is determined that a vertical positioning model corresponding to the first category is used to measure vertical information of the target mobile terminal. If it is determined that an area in which the target mobile terminal is currently located is a round test area corresponding to the second category, it is determined that a vertical positioning model corresponding to the second category is used to measure vertical information of the target mobile terminal.

It should be noted that, the network device may alternatively determine, in another manner, the round test area in which the target mobile terminal is currently located. This is not limited herein.

606. The network device obtains the vertical information of the target mobile terminal.

When determining that the area in which the target mobile terminal is currently located is the round test area corresponding to the first category, the network device determines to use the vertical positioning model corresponding to the first category to obtain the vertical information of the target mobile terminal. The vertical positioning model corresponding to the first category is (3-2).

$$h_{mr} = k_2[D_{class1} - \min(D_{class1})] \quad \text{(3-2)}$$

$h_{mr}$ is the vertical information of the target mobile terminal, and $D_{class1}$ is a Euclidean distance of the target mobile terminal.

When determining that the area in which the target mobile terminal is currently located is the round test area corresponding to the second category, the network device determines to use the vertical positioning model corresponding to the second category to obtain the vertical information of the target mobile terminal. The vertical positioning model corresponding to the second category is (3-4).

$$h_{mr} = k_3[D_{class2} - \min(D_{class2})] \quad \text{(3-4)}$$

$h_{mr}$ is the vertical information of the target mobile terminal, and $D_{class2}$ is a Euclidean distance of the target mobile terminal.

In this embodiment, the network device may determine, based on the target MR, the category of the area in which the target mobile terminal is currently located, and determine the vertical information of the target mobile terminal based on the vertical positioning model corresponding to the category of the area in which the target mobile terminal is currently located. Therefore, in this embodiment, the network device can obtain the vertical information of the target mobile terminal as long as obtaining the target MRs uploaded by the target mobile terminal, thereby improving efficiency of obtaining the vertical information of the target mobile terminal by the network device.

The foregoing describes the method embodiments of this application, and the following describes devices in this application.

FIG. 7 is a schematic block diagram of a computer device according to an embodiment of this application. The computer device includes:

a determining unit 701, configured to determine, in measurement reports MRs of a mobile terminal, a signature feature of measurement report call information MRCALL, where the signature feature of the MRCALL is proportions of appearance of cells in one call of the mobile terminal;

an obtaining unit 702, configured to obtain a round test signature feature of a target building, where the round test signature feature is proportions of the cells in the target building, and location information of the target building corresponds to information about a current location of the mobile terminal; and

a construction unit 703, configured to construct a vertical positioning model based on the signature feature of the MRCALL, the round test signature feature, and height information of the target building, where the vertical positioning model is used to measure vertical information of a target mobile terminal.

Optionally, in this embodiment, the obtaining unit 702 is specifically configured to:

obtain GPS information of the mobile terminal; and

determine the round test signature feature of the target building based on the GPS information.

Optionally, in this embodiment, the determining unit 701 is specifically configured to:

determine a quantity of measurement reports MRs of the mobile terminal in one call, where the MRs include cell information; and

determine the signature feature of the MRCALL based on the cell information included in each of the MRs.

Optionally, in this embodiment, the construction unit 703 is specifically configured to:

perform dimension reduction on the signature feature of the MRCALL and the round test signature feature by using a dimension reduction algorithm; and

construct the vertical positioning model based on a dimension-reduced signature feature of the MRCALL, a dimension-reduced round test signature feature, and the height information of the target building.

In this embodiment, the construction unit 703 is specifically configured to construct the vertical positioning model by using a vector product algorithm based on the signature feature of the MRCALL, the round test signature feature, and the height information of the target building.

In this embodiment, the obtaining unit 702 obtains the round test signature feature of the target building by using the GPS information reported by the mobile terminal. The determining unit 701 is configured to determine the signature feature of the MRCALL based on the MRs reported by the mobile terminal. The construction unit 703 constructs the vertical positioning model in combination with the height information of the target building. The vertical positioning model is used to measure vertical information of a measured mobile terminal. Therefore, in this embodiment, the computer device can construct, based on the signature feature of the MRCALL, the round test signature feature, and the height information of the target building, the vertical positioning model used to measure the measured mobile terminal, thereby improving efficiency of obtaining a vertical position of the mobile terminal by a network device.

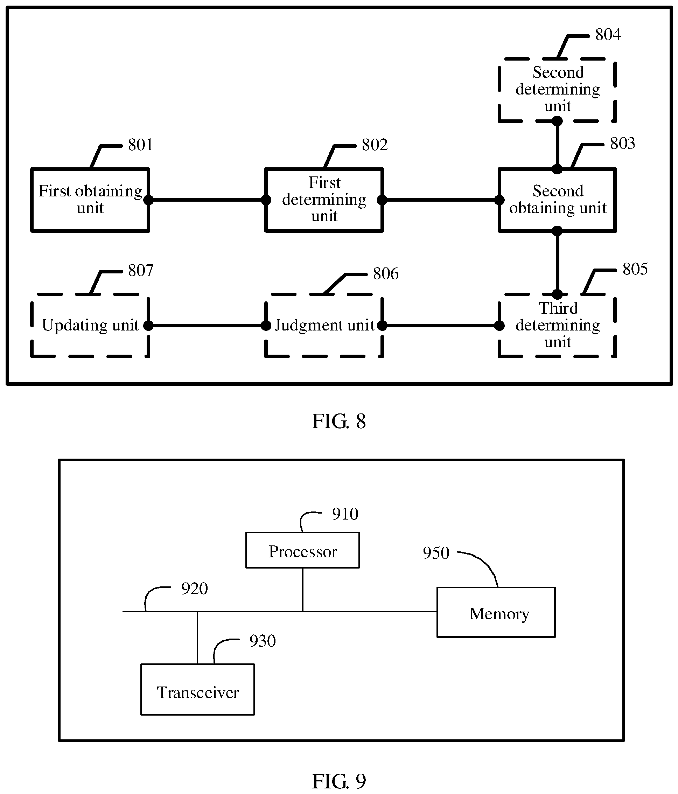

FIG. 8 is a schematic block diagram of a network device according to an embodiment of this application. The network device includes:

a first obtaining unit 801, configured to obtain target MRs uploaded by a target mobile terminal;
a first determining unit 802, configured to determine a signature feature of target MRCALL of the target mobile terminal based on the target MRs; and
a second obtaining unit 803, configured to obtain vertical information of the target mobile terminal based on the signature feature of the target MRCALL, a target round test signature feature, and a vertical positioning model, where the target round test signature feature is a round test signature feature of a building in which the target mobile terminal is currently located.

Optionally, in this embodiment, the network device further includes a second determining unit 804, and the second determining unit 804 is specifically configured to:

determine, based on the target MRs, a round test area in which the target mobile terminal is located; and
determine the vertical positioning model based on the round test area.

In this embodiment, the network device further includes:

a third determining unit 805, configured to determine a similarity between the signature feature of the target MRCALL and the target round test signature feature;
a judgment unit 806, configured to determine whether a difference between the similarity and a target similarity is greater than a preset threshold, where the target similarity includes a similarity between a signature feature of MRCALL and a round test signature feature that are included in the vertical positioning model; and
an updating unit 807, configured to update the vertical positioning model when the difference between the similarity and the target similarity is greater than the preset threshold.

In this embodiment, the first obtaining unit 801 obtains the target MRs uploaded by a measured mobile terminal. The second obtaining unit 803 obtains the vertical information of the target mobile terminal based on the target MRCALL, the target round test signature feature, and the vertical positioning model. Therefore, in this embodiment, the network device can obtain the vertical information of the target mobile terminal as long as the network device obtains the target MRs uploaded by the measured mobile terminal, thereby improving efficiency of obtaining the vertical information of the target mobile terminal by the network device.

An embodiment of this application further provides a computer device. FIG. 9 is a schematic diagram of a hardware structure of a computer device according to an embodiment of this application. The computer device includes at least one processor 910, a memory 950, and a transceiver 930. The transceiver may include a receiver and a transmitter. The memory 950 may include a read-only memory and/or a random access memory, and provide an operation instruction and data for the processor 910. A part of the memory 950 may further include a non-volatile random access memory (NVRAM).

In some implementations, the memory 950 stores the following elements: an executable module or a data structure, a subset thereof, or an extended set thereof.

In this embodiment of this application, a corresponding operation is performed by invoking the operation instruction (where the operation instruction may be stored in an operating system) stored in the memory 950. The processor 910 controls an operation of the computer device. The processor 910 may also be referred to as a CPU (Central Processing Unit, central processing unit). The memory 950 may include a read-only memory and a random access memory, and provide an instruction and data to the processor 910. A part of the memory 950 may further include a non-volatile random access memory (NVRAM). In a specific application, components of the computer device are coupled together by using a bus system 920. The bus system 920 may further include a power bus, a control bus, a status signal bus, and the like in addition to a data bus. However, for clear description, various buses in the figure are marked as the bus system 920.

The methods disclosed in the embodiments of this application may be used in the processor 910, or may be implemented by the processor 910. The processor 910 may be an integrated circuit chip, and has a signal processing capability. In an implementation process, the steps of the foregoing methods may be implemented by using a hardware integrated logic circuit in the processor 910 or by using instructions in a form of software. The processor 910 may be a general purpose processor, a digital signal processor (DSP), an application-specific integrated circuit (ASIC), a field programmable gate array (FPGA) or another programmable logic component, a discrete gate or a transistor logical device, or a discrete hardware component. The processor 910 may implement or perform the methods, the steps, and the logical block diagrams that are disclosed in the embodiments of this application. The general purpose processor may be a microprocessor, or the processor may be any conventional processor, or the like. The steps of the methods disclosed with reference to the embodiments of this application may be directly executed and completed by using a hardware decoding processor, or may be executed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 950. The memory 950 may be a physically independent unit, or may be integrated into the processor 910. The processor 910 reads information in the memory 950, and completes the steps of the foregoing methods in combination with hardware of the processor 910.

The transceiver 930 may be configured to perform the operation steps of receiving and sending on a computer device side in the embodiment corresponding to FIG. 2 and the embodiment corresponding to FIG. 3, or steps of data sending and receiving on a computer device side in another optional embodiment.

The processor 910 may be configured to perform the step of data processing on the computer device side in the embodiment corresponding to FIG. 2 and the embodiment corresponding to FIG. 3, or a step of data processing on the computer device side in the another optional embodiment.

An embodiment of this application further provides a network device. The network device includes at least one processor, a memory, a transceiver, and a system bus. A hardware structure and functions of the network device are similar to the hardware structure corresponding to FIG. 9. For details, refer to FIG. 9. The transceiver may be configured to perform the operation steps of receiving and sending on a network device side in the embodiment corresponding to FIG. 5 and the embodiment corresponding to FIG. 6, or steps of data sending and receiving on a network device side in another optional embodiment. The processor may be configured to perform the step of data processing on the network device side in the embodiment corresponding to FIG. 5 and the embodiment corresponding to FIG. 6, or a step of data processing on the network device side in the another optional embodiment.

All or some of the foregoing embodiments may be implemented by using software, hardware, firmware, or any combination thereof. When the embodiments are implemented by using software, all or some of the embodiments may be implemented in a form of a computer program product.

The computer program product includes one or more computer instructions. When the computer program instructions are loaded and executed on a computer, the processes or functions according to the embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a server or a data center, integrating one or more usable media. The usable medium may be a magnetic medium (for example, a soft disk, a hard disk, or a magnetic tape), an optical medium (for example, a DVD), a semiconductor medium (for example, a solid-state drive Solid State Disk (SSD)), or the like.

Persons of ordinary skill in the art may understand that all or some of the steps of the methods in the embodiments may be implemented by a program instructing related hardware. The program may be stored in a computer-readable storage medium. The storage medium may include: a ROM, a RAM, a magnetic disk, an optical disk, or the like.

Persons skilled in the art may clearly understand that, for convenient and brief description, for a detailed working process of the foregoing system, apparatus, and unit, refer to the corresponding processes in the foregoing method embodiments, and details are not described herein again.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions set forth in the foregoing embodiments or make replacements to some technical features thereof, without departing from the scope of the technical solutions of the embodiments as set out in the claims of this application.

# EP 3 817 467 B1

**Claims**

1. A method for constructing a vertical positioning model, wherein the method comprises:

a computer device determining (204), in measurement reports MRs of a mobile terminal (102) uploaded by the mobile terminal (102) during one call, a signature feature of measurement report call information MRCALL, the signature feature of the MRCALL being proportions of appearance of cells in the call of the mobile terminal (102) and by the method further comprising;
the computer device obtaining (205) a round test signature feature of a target building (101), wherein the round test signature feature is proportions of the cells in the target building (101), and location information of the target building (101) corresponds to information about a current location of the mobile terminal (102); and
the computer device constructing (206) a vertical positioning model based on the signature feature of the MRCALL the round test signature feature, and height information of the target building (101), wherein the vertical positioning model is used to measure vertical information of a target mobile terminal (102).

2. The method according to claim 1, wherein the obtaining a round test signature feature of a target building (101) comprises:

the computer device obtaining GPS information of the mobile terminal (102); and
the computer device determining the round test signature feature of the target building (101) based on the GPS information.

3. The method according to claim 1 or 2, wherein the determining, in measurement reports MRs of a mobile terminal (102), a signature feature of measurement report call information MRCALL comprises:

the computer device determining a quantity of measurement reports MRs of the mobile terminal (102) in said one call, wherein the MRs comprise cell information: and
the computer device determining the signature feature of the MRCALL based on the cell information comprised in each of the MRs.

4. The method according to claim 1 or 3, wherein the constructing a vertical positioning model based on the signature feature of the MRCALL, the round test signature feature, and height information of the target building (101) comprises:

the computer device performing dimension reduction on the signature feature of the MRCALL and the round test signature feature by using a feature dimension reduction algorithm; and
the computer device constructing the vertical positioning model based on a dimension-reduced signature feature of the MRCALL, a dimension-reduced round test signature feature, and the height information of the target building (101).

5. The method according to claim 1 or 3, wherein the constructing a vertical positioning model based on the signature feature of the MRCALL, the round test signature feature, and height information of the target building (101) comprises:
the computer device constructing the vertical positioning model by using a vector product algorithm based on the signature feature of the MRCALL, the round test signature feature, and the height information of the target building (101).

6. A vertical positioning method, wherein the method comprises:

a network device (103) obtaining (501) target measurement reports MRs of a target mobile terminal (102) uploaded by the target mobile terminal (102) during one call;
the network device (103) determining (502) a signature feature of target measurement report call information MRCALL of the target mobile terminal (102) based on the target MRs, the signature feature of the MRCALL being proportions of appearance of cells in the one call of the target mobile terminal (102); and
the network device (103) obtaining (504) vertical information of the target mobile terminal (102) based on the signature feature of the target MRCALL, a target round test signature feature, and a vertical positioning model, wherein the target round test signature feature is proportions of the cells in a building (101) in which the target mobile terminal (102) is currently located.

7. The method according to claim 6, wherein before the obtaining vertical information of the target mobile terminal

13

(102) based on the signature feature of the target MRCALL, a target round test signature feature, and a vertical positioning model, the method further comprises:

the network device (103) determining, based on the target MRs, a round test area in which the target mobile terminal (102)is located; and
the network device (103) determining the vertical positioning model based on the round test area.

8. The method according to claim 6 or 7, wherein the method further comprises:

the network device (103) determining a similarity between the signature feature of the target MRCALL and the target round test signature feature;
the network device (103) determining whether a difference between the similarity and a target similarity is greater than a preset threshold, wherein the target similarity comprises a similarity between a signature feature of MRCALL and a round test signature feature that are comprised in the vertical positioning model; and
if yes, the network device (103) updating the vertical positioning model.

9. A computer device comprising:

a determining unit (701), configured to determine, in measurement reports MRs of a mobile terminal (102) uploaded by the mobile terminal (102) during one call, a signature feature of measurement report call information MRCALL, wherein the signature feature of the MRCALL is proportions of appearance of cells in the call of the mobile terminal (102);
an obtaining unit (702), configured to obtain a round test signature feature of a target building (101), wherein the round test signature feature is proportions of the cells in the target building (101), and location information of the target building (101) corresponds to information about a current location of the mobile terminal (102); and
a construction unit (703), configured to construct a vertical positioning model based on the signature feature of the MRCALL, the round test signature feature, and height information of the target building (101), wherein the vertical positioning model is used to measure vertical information of a target mobile terminal (102).

10. The computer device according to claim 9, wherein the obtaining unit (702) is specifically configured to:

obtain GPS information of the mobile terminal (102); and
determine the round test signature feature of the target building (101) based on the GPS information.

11. The computer device according to claim 9 or 10, wherein the determining unit (701) is specifically configured to:

determine a quantity of measurement reports MRs of the mobile terminal (102) in said one call, wherein the MRs comprise cell information; and
determine the signature feature of the MRCALL based on the cell information comprised in each of the MRs.

12. The computer device according to claim 9 or 11, wherein the construction unit (703) is specifically configured to:

perform dimension reduction on the signature feature of the MRCALL and the round test signature feature by using a feature dimension reduction algorithm; and
construct the vertical positioning model based on a dimension-reduced signature feature of the MRCALL, a dimension-reduced round test signature feature, and the height information of the target building (101).

13. The computer device according to claim 9 or 11, wherein the construction unit (703) is specifically configured to construct the vertical positioning model by using a vector product algorithm based on the signature feature of the MRCALL, the round test signature feature, and the height information of the target building (101).

14. A network device (103) comprising:

a first obtaining unit (801), configured to obtain target measurement reports MRs of a target mobile terinal (102) uploaded by the target mobile terminal (102) during one call;
a first determining unit (802), configured to determine a signature feature of target measurement report call information MRCALL of the target mobile terminal (102) based on the target MRs, the signature feature of the MRCALL being proportions of appearance of cells in the one call of the target mobile terminal (102); and

a second obtaining unit (803), configured to obtain vertical information of the target mobile terminal (102) based on the signature feature of the target MRCALL, a target round test signature feature, and a vertical positioning model, wherein the target round test signature feature is proportions of the cells in a building (101) in which the target mobile terminal (102) is currently located.

15. The network device (103) according to claim 14, wherein the network device (103) further comprises a second determining unit (804), and the second determining unit (804) is configured to:

determine, based on the target MRs, a round test area in which the target mobile terminal (102) is located; and determine the vertical positioning model based on the round test area.


**Patentansprüche**

1. Verfahren zur Konstruktion eines Modells zur vertikalen Positionierung, wobei das Verfahren umfasst:
eine Rechenvorrichtung, die in Messberichten, MRs, eines Mobilendgeräts (102), die durch das Mobilendgerät (102) während eines Anrufs hochgeladen werden, ein Signaturmerkmal von Messberichtsanrufinformationen, MRCALLs, bestimmt (204), wobei das Signaturmerkmal der MRCALLs Häufigkeitsverhältnisse des Auftretens von Zellen in dem Anruf des Mobilendgeräts (102) sind, wobei das Verfahren ferner umfasst:

Erhalten (205) eines Rundtestsignaturmerkmals eines Zielgebäudes (101) durch die Rechenvorrichtung, wobei das Rundtestsignaturmerkmal Häufigkeitsverhältnisse der Zellen in dem Zielgebäude (101) sind und Positionsinformationen des Zielgebäudes (101) Informationen über eine aktuelle Position des Mobilendgeräts (102) entsprechen; und
Konstruieren (206) eines Modells zur vertikalen Positionierung durch die Rechenvorrichtung basierend auf dem Signaturmerkmal der MRCALLs, dem Rundtestsignaturmerkmal und den Höheninformationen des Zielgebäudes (101) basiert, wobei das Modell zur vertikalen Positionierung dazu verwendet wird, vertikale Informationen eines Ziel-Mobilendgeräts (102) zu messen.

2. Verfahren gemäß Anspruch I, wobei das Erhalten eines Rundtestsignaturmerkmals eines Zielgebäudes (101) umfasst:

Erhalten von GPS-Informationen des Mobilendgeräts (102) durch die Rechenvorrichtung; und
Bestimmen des Rundtestsignaturmerkmals des Zielgebäudes (101) durch die Rechenvorrichtung basierend auf den GPS-Informationen.

3. Verfahren gemäß Anspruch 1 oder 2, wobei das Bestimmen eines Signaturmerkmals von Messberichtsanrufinformationen, MRCALLs, in Messberichten, MRs, eines Mobilendgeräts (102) umfasst:

Bestimmen einer Menge von Messberichten, MRs, des Mobilendgeräts (102) in dem einen Anruf durch die Rechenvorrichtung, wobei die MRs Zelleninformationen umfassen; und
Bestimmen des Signaturmerkmals der MRCALLs durch die Rechenvorrichtung basierend auf den Zelleninformationen, die in jedem der MRs enthalten sind.

4. Verfahren gemäß Anspruch 1 oder 3, wobei das Konstruieren eines Modells zur vertikalen Positionierung basierend auf dem Signaturmerkmal der MRCALLs, dem Rundtestsignaturmerkmal und den Höheninformationen des Zielgebäudes (101) umfasst:

Durchführen einer Dimensionsreduzierung an dem Signaturmerkmal der MRCALLs und des Rundtestsignaturmerkmals durch die Rechenvorrichtung unter Verwendung eines Merkmalsdimensionsreduzierungsalgorithmus; und
Konstruieren des Modells zur vertikalen Positionierung durch die Rechenvorrichtung basierend auf einem dimensionsreduzierten Signaturmerkmal der MRCALLs, einem dimensionsreduzierten Rundtestsignaturmerkmal und den Höheninformationen des Zielgebäudes (101).

5. Verfahren gemäß Anspruch 1 oder 3, wobei das Konstruieren eines Modells zur vertikalen Positionierung basierend auf dem Signaturmerkmal der MRCALLs, dem Rundtestsignaturmerkmal und den Höheninformationen des Zielgebäudes (101) umfasst: Konstruieren des Modells zur vertikalen Positionierung durch die Rechenvorrichtung unter Verwendung eines Vektorproduktalgorithmus basierend auf dem Signaturmerkmal der MRCALLs, dem Rundtestsignaturmerkmal und den Höheninformationen des Zielgebäudes (101).

6. Verfahren zur vertikalen Positionierung, wobei das Verfahren umfasst:

Erhalten (501) von Zielmessberichten, MRs, eines Ziel-Mobilendgeräts (102) durch eine Netzwerkvorrichtung (103), die während eines Anrufs durch das Ziel-Mobilendgerät (102) hochgeladen werden;
Bestimmen (502) eines Signaturmerkmals der Zielmessberichtanrufinformationen, MRCALLs, des Ziel-Mobilendgeräts (102) durch die Netzwerkvorrichtung (103) basierend auf den Ziel-MRs, wobei das Signaturmerkmal der MRCALLs Häufigkeitsverhältnisse des Auftretens von Zellen in dem einen Anruf des Ziel-Mobilendgeräts (102) sind; und
Erhalten (504) von vertikalen Informationen des Ziel-Mobilendgeräts (102) durch die Netzwerkvorrichtung (103) basierend auf dem Signaturmerkmal der Ziel-MRCALLs, einem Ziel-Rundtestsignaturmerkmal und einem Modell zur vertikalen Positionierung, wobei das Ziel-Rundtestsignaturmerkmal Häufigkeitsverhältnisse der Zellen in einem Gebäude (101) sind, in dem sich das Ziel-Mobilendgerät (102) aktuell befindet.

7. Verfahren gemäß Anspruch 6, wobei das Verfahren vor dem Erhalten von vertikalen Informationen des Ziel-Mobilendgeräts (102) basierend auf dem Signaturmerkmal der Ziel-MRCALLs, einem Ziel-Rundtestsignaturmerkmals und eines Modells zur vertikalen Positionierung ferner umfasst:

Bestimmen eines Rundtestbereichs, in dem sich das Ziel-Mobilendgerät (102) befindet, durch die Netzwerkvorrichtung (103) basierend auf den Ziel-MRs; und
Bestimmen des Modells zur vertikalen Positionierung durch die Netzwerkvorrichtung (103) basierend auf dem Rundtestbereich.

8. Verfahren gemäß Anspruch 6 oder 7, wobei das Verfahren ferner umfasst:

Bestimmen einer Ähnlichkeit zwischen dem Signaturmerkmal der Ziel-MRCALLs und dem Ziel-Rundtestsignaturmerkmal durch die Netzwerkvorrichtung (103);
Bestimmen durch die Netzwerkvorrichtung (103), ob eine Differenz zwischen der Ähnlichkeit und einer Zielähnlichkeit größer als ein vorgegebener Schwellenwert ist, wobei die Zielähnlichkeit eine Ähnlichkeit zwischen einem Signaturmerkmal der MRCALLs und einem Rundtestsignaturmerkmal umfasst, die in dem Modell zur vertikalen Positionierung enthalten sind; und
wenn ja, Aktualisieren des Modells zur vertikalen Positionierung durch die Netzwerkvorrichtung (103).

9. Rechenvorrichtung, umfassend:

eine Bestimmungseinheit (701), die dazu ausgelegt ist, in Messberichten, MRs, eines Mobilendgeräts (102), die durch das Mobilendgerät (102) während eines Anrufs hochgeladen werden, ein Signaturmerkmal von Messberichtsanrufinformationen, MRCALLs, zu bestimmen, wobei das Signaturmerkmal der MRCALLs Häufigkeitsverhältnisse des Auftretens von Zellen in dem Anruf des Mobilendgeräts (102) sind;
eine Erhalteeinheit (702), die dazu ausgelegt ist, ein Rundtestsignaturmerkmal eines Zielgebäudes (101) zu erhalten, wobei das Rundtestsignaturmerkmal Häufigkeitsverhältnisse der Zellen in dem Zielgebäude (101) sind und Positionsinformationen des Zielgebäudes (101) Informationen über eine aktuelle Position des Mobilendgeräts (102) entsprechen; und
eine Konstruktionseinheit (703), die dazu ausgelegt ist, ein Modell zur vertikalen Positionierung basierend auf dem Signaturmerkmal der MRCALLs, dem Rundtestsignaturmerkmal und den Höheninformationen des Zielgebäudes (101) zu konstruieren, wobei das Modell zur vertikalen Positionierung dazu verwendet wird, vertikale Informationen eines Ziel-Mobilendgeräts (102) zu messen.

10. Rechenvorrichtung gemäß Anspruch 9, wobei die Erhalteeinheit (702) speziell dazu ausgelegt ist:

GPS-Informationen des Mobilendgeräts (102) zu erhalten; und
das Rundtestsignaturmerkmal des Zielgebäudes (101) basierend auf den GPS-Informationen zu bestimmen.

11. Rechenvorrichtung gemäß Anspruch 9 oder 10, wobei die Bestimmungseinheit (701) speziell dazu ausgelegt ist:

eine Menge von Messberichten, MRs, des Mobilendgeräts (102) in dem einen Anruf zu bestimmen, wobei die MRs Zelleninformationen umfassen; und

das Signaturmerkmal der MRCALLs basierend auf den Zelleninformationen, die in jedem der MRs enthalten sind, zu bestimmen.

**12.** Rechenvorrichtung gemäß Anspruch 9 oder 11, wobei die Konstruktionseinheit (703) speziell dazu ausgelegt ist:

eine Dimensionsreduzierung des Signaturmerkmals der MRCALLs und des Rundtestsignaturmerkmals unter Verwendung eines Dimensionsreduzierungsalgorithmus durchzuführen; und

das Modell zur vertikalen Positionierung basierend auf einem dimensionsreduzierten Signaturmerkmal der MRCALLs, einem dimensionsreduzierten Rundtestsignaturmerkmal und den Höheninformationen des Zielgebäudes (101) zu konstruieren.

**13.** Rechenvorrichtung gemäß Anspruch 9 oder 11, wobei die Konstruktionseinheit (703) speziell dazu ausgelegt ist, das Modell zur vertikalen Positionierung unter Verwendung eines Vektorproduktalgorithmus zu konstruieren, der auf dem Signaturmerkmal der MRCALLs, dem Rundtestsignaturmerkmal und den Höheninformationen des Zielgebäudes (101) basiert.

**14.** Netzwerkvorrichtung (103), umfassend:

eine erste Erhalteeinheit (801), die dazu ausgelegt ist, Zielmessberichte, MRs, eines Ziel-Mobilendgeräts (102) zu erhalten, die durch das Ziel-Mobilendgerät (102) während eines Anrufs hochgeladen werden;

eine erste Bestimmungseinheit (802), die dazu ausgelegt ist, ein Signaturmerkmal von Zielmessberichtsanrufinformationen, MRCALLS, des Ziel-Mobilendgeräts (102) basierend auf den Ziel-MRs zu bestimmen, wobei das Signaturmerkmal der MRCALLs Häufigkeitsverhältnisse des Auftretens von Zellen in dem einen Anruf des Ziel-Mobilendgeräts (102) sind; und

eine zweite Erhalteeinheit (803), die dazu ausgelegt ist, vertikale Informationen des Ziel-Mobilendgeräts (102) basierend auf dem Signaturmerkmal der Ziel-MRCALLS, einem Ziel-Rundtestsignaturmerkmal und einem Modell zur vertikalen Positionierung zu erhalten, wobei das Ziel-Rundtestsignaturmerkmal Häufigkeitsverhältnisse der Zellen in einem Gebäude (101) sind, in dem sich das Ziel-Mobilendgerät (102) aktuell befindet.

**15.** Netzwerkvorrichtung (103) gemäß Anspruch 14, wobei die Netzwerkvorrichtung (103) ferner eine zweite Bestimmungseinheit (804) umfasst und die zweite Bestimmungseinheit (804) dazu ausgelegt ist:

basierend auf den Ziel-MRs einen Rundtestbereich zu bestimmen, in dem sich das Ziel-Mobilendgerät (102) befindet; und

das Modell zur vertikalen Positionierung basierend auf dem Rundtestbereich zu bestimmen.

**Revendications**

**1.** Procédé de construction d'un modèle de positionnement vertical, le procédé comprenant :

un dispositif informatique déterminant (204) dans des rapports de mesure MR d'un terminal mobile (102) téléchargés par le terminal mobile (102) au cours d'un appel,

une caractéristique de signature d'informations d'appel de rapport de mesure MRCALL, la caractéristique de signature du MRCALL étant une proportion d'apparition de cellules dans l'appel du terminal mobile (102) et le procédé comprenant en outre ;

le dispositif informatique obtenant (205) une caractéristique de signature de mesure d'environnement d'un bâtiment cible (101), la caractéristique de signature de mesure d'environnement étant une proportion des cellules dans le bâtiment cible (101), et des informations de localisation du bâtiment cible (101) correspondant aux informations sur la localisation actuelle du terminal mobile (102) ; et

le dispositif informatique construisant (206) un modèle de positionnement vertical basé sur la caractéristique de signature du MRCALL, la caractéristique de signature de mesure d'environnement et les informations de hauteur du bâtiment cible (101), le modèle de positionnement vertical étant utilisé pour mesurer des informations verticales d'un terminal mobile cible (102).

**2.** Procédé selon la revendication 1, l'obtention d'une caractéristique de signature de mesure d'environnement d'un bâtiment cible (101) comprenant :

le dispositif informatique obtenant des informations GPS du terminal mobile (102) ; et
le dispositif informatique déterminant la caractéristique de signature de mesure d'environnement du bâtiment
cible (101) sur la base des informations GPS.

3. Procédé selon la revendication 1 ou 2, la détermination, dans des rapports de mesure MR d'un terminal mobile (102), d'une caractéristique de signature d'informations d'appel de rapport de mesure MRCALL comprenant :

le dispositif informatique déterminant une quantité de rapports de mesure MR du terminal mobile (102) dans ledit appel, les MR comprenant des informations de cellule ; et
le dispositif informatique déterminant la caractéristique de signature du MRCALL sur la base des informations de cellule comprises dans chacun des MR.

4. Procédé selon la revendication 1 ou 3, la construction d'un modèle de positionnement vertical basé sur la caractéristique de signature du MRCALL, de la caractéristique de signature de mesure d'environnement, et des informations de hauteur du bâtiment cible (101) comprenant :

le dispositif informatique réalisant une réduction de dimension sur la caractéristique de signature du MRCALL et la caractéristique de signature de mesure d'environnement à l'aide d'un algorithme de réduction de dimension de caractéristique ; et
le dispositif informatique construisant le modèle de positionnement vertical sur la base d'une caractéristique de signature du MRCALL réduite, d'une caractéristique de signature de mesure d'environnement réduite et des informations de hauteur du bâtiment cible (101).

5. Procédé selon la revendication 1 ou 3, la construction d'un modèle de positionnement vertical basé sur la caractéristique de signature du MRCALL, de la caractéristique de signature de mesure d'environnement, et des informations de hauteur du bâtiment cible (101) comprenant :
le dispositif informatique construisant le modèle de positionnement vertical à l'aide d'un algorithme de produit vectoriel basé sur la caractéristique de signature du MRCALL, de la caractéristique de signature de mesure d'environnement et des informations de hauteur du bâtiment cible (101).

6. Procédé de positionnement vertical, le procédé comprenant :

un dispositif de réseau (103) obtenant (501) des rapports de mesure cibles MR d'un terminal mobile cible (102) téléchargés par le terminal mobile cible (102) au cours d'un appel ;
le dispositif de réseau (103) déterminant (502) une caractéristique de signature d'informations d'appel de rapport de mesure cible MRCALL du terminal mobile cible (102) sur la base des MR cibles, la caractéristique de signature du MRCALL étant une proportion d'apparition de cellules dans l'appel du terminal mobile cible (102) ; et le dispositif de réseau (103) obtenant (504) des informations verticales du terminal mobile cible (102) sur la base de la caractéristique de signature du MRCALL cible, d'une caractéristique de signature de mesure d'environnement cible et d'un modèle de positionnement vertical, la caractéristique de signature de mesure d'environnement cible étant une proportion des cellules dans un bâtiment (101) dans lequel le terminal mobile cible (102) est actuellement situé.

7. Procédé selon la revendication 6, avant l'obtention d'informations verticales du terminal mobile cible (102) sur la base de la caractéristique de signature du MRCALL cible, d'une caractéristique de signature de mesure d'environnement cible, et d'un modèle de positionnement vertical, le procédé comprenant en outre :

le dispositif de réseau (103) déterminant, sur la base du MR cible, une zone de mesure d'environnement dans laquelle le terminal mobile cible (102) est situé ; et
le dispositif de réseau (103) déterminant le modèle de positionnement vertical sur la base de la zone de mesure d'environnement.

8. Procédé selon la revendication 6 ou 7, le procédé comprenant en outre :

le dispositif de réseau (103) déterminant une similitude entre la caractéristique de signature du MRCALL cible et la caractéristique de signature de mesure d'environnement cible ;
le dispositif de réseau (103) déterminant si une différence entre la similarité et une similarité cible est supérieure à un seuil prédéfini, la similarité cible comprenant une similarité entre une caractéristique de signature de MRCALL et une caractéristique de signature de mesure d'environnement qui sont comprises dans le modèle de positionnement vertical ; et

dans l'affirmative, le dispositif de réseau (103) mettant à jour le modèle de positionnement vertical.

9. Dispositif informatique comprenant :

une unité de détermination (701), configurée pour déterminer, dans des rapports de mesure MR d'un terminal mobile (102) téléchargés par le terminal mobile (102) au cours d'un appel, une caractéristique de signature d'informations d'appel de rapport de mesure MRCALL, la caractéristique de signature du MRCALL étant une proportion d'apparition de cellules dans l'appel du terminal mobile (102) ;

une unité d'obtention (702), configurée pour obtenir une caractéristique de signature de mesure d'environnement d'un bâtiment cible (101), la caractéristique de signature de mesure d'environnement étant une proportion des cellules dans le bâtiment cible (101), et des informations de localisation du bâtiment cible (101) correspondant à des informations sur la localisation actuelle du terminal mobile (102) ; et

une unité de construction (703), configurée pour construire un modèle de positionnement vertical basé sur la caractéristique de signature du MRCALL, la caractéristique de signature de mesure d'environnement et les informations de hauteur du bâtiment cible (101), le modèle de positionnement vertical étant utilisé pour mesurer des informations verticales d'un terminal mobile cible (102).

10. Dispositif informatique selon la revendication 9, l'unité d'obtention (702) étant spécifiquement configurée pour :

obtenir des informations GPS du terminal mobile (102) ; et

déterminer la caractéristique de signature de mesure d'environnement du bâtiment cible (101) sur la base des informations GPS.

11. Dispositif informatique selon la revendication 9 ou 10, l'unité de détermination (701) étant spécifiquement configurée pour :

déterminer une quantité de rapports de mesure MR du terminal mobile (102) dans ledit appel, les MR comprenant des informations de cellule ; et

déterminer la caractéristique de signature du MRCALL sur la base des informations de cellule comprises dans chacun des MR.

12. Dispositif informatique selon la revendication 9 ou 11, l'unité de construction (703) étant spécifiquement configurée pour :

réaliser une réduction de dimension sur la caractéristique de signature du MRCALL et la caractéristique de signature de mesure d'environnement en utilisant un algorithme de réduction de dimension de caractéristique ; et

construire le modèle de positionnement vertical sur la base d'une caractéristique de signature réduite du MRCALL, d'une caractéristique de signature de mesure d'environnement réduite et des informations de hauteur du bâtiment cible (101).

13. Dispositif informatique selon la revendication 9 ou 11, l'unité de construction (703) étant spécifiquement configurée pour construire le modèle de positionnement vertical en utilisant un algorithme de produit vectoriel basé sur la caractéristique de signature du MRCALL, la caractéristique de signature de mesure d'environnement et les informations de hauteur du bâtiment cible (101).

14. Dispositif de réseau (103) comprenant

une première unité d'obtention (801), configurée pour obtenir des rapports de mesure cibles MR d'un terminal mobile cible (102) téléchargés par un terminal mobile cible (102) au cours d'un appel ;

une première unité de détermination (802), configurée pour déterminer une caractéristique de signature d'informations d'appel de rapport de mesure cible MRCALL du terminal mobile cible (102) sur la base des MR cibles, la caractéristique de signature du MRCALL étant une proportion d'apparition de cellules dans l'appel du terminal mobile cible (102) ; et

une deuxième unité d'obtention (803), configurée pour obtenir des informations verticales du terminal mobile cible (102) sur la base de la caractéristique de signature du MRCALL cible, d'une caractéristique de signature de mesure d'environnement cible et d'un modèle de positionnement vertical, la caractéristique de signature de mesure d'environnement cible étant une proportion des cellules dans un bâtiment (101) dans lequel le terminal mobile cible (102) est actuellement situé.

15. Dispositif de réseau (103) selon la revendication 14, le dispositif de réseau (103) comprenant en outre une deuxième unité de détermination (804), et la deuxième unité de détermination (804) étant configurée pour :

déterminer, sur la base du MR cible, une zone de mesure d'environnement dans laquelle le terminal mobile cible (102) est situé ; et
déterminer le modèle de positionnement vertical sur la base de la zone de mesure d'environnement.

FIG. 1

| A computer device obtains GPS information | 201 |

↓

| The computer device determines round test information of a target building and horizontal fingerprint information of a mobile terminal based on the GPS information | 202 |

↓

| The computer device associates the round test information with the horizontal fingerprint information | 203 |

↓

| The computer device determines, in MRs of the mobile terminal, a signature feature of measure report call information MRCALL | 204 |

↓

| The computer device obtains a round test signature feature of the target building | 205 |

↓

| The computer device constructs a vertical positioning model based on the signature feature of the MRCALL, the round test signature feature, and height information of the target building | 206 |

FIG. 2

A computer device obtains GPS information — 301

The computer device determines round test information of a target building and horizontal fingerprint information of a mobile terminal based on the GPS information — 302

The computer device associates the round test information with the horizontal fingerprint information — 303

The computer device determines, in MRs of the mobile terminal, a signature feature of measure report call information MRCALL — 304

The computer device obtains a round test signature feature of the target building — 305

The computer device performs dimension reduction on the signature feature of the MRCALL and the round test signature feature — 306

The computer device clusters a round test area — 307

The computer device constructs a vertical positioning model — 308

FIG. 3

FIG. 4

A network device obtains target MRs of a target mobile terminal — 501

The network device determines, in the target MRs, a signature feature of target MRCALL of the target mobile terminal — 502

The network device obtains a target round test signature feature — 503

The network device determines vertical information of the target mobile terminal based on the target round test signature feature, the signature feature of the target MRCALL, and a vertical positioning model — 504

FIG. 5

A network device obtains target MRs of a target mobile terminal — 601

↓

The network device determines, in the target MRs, a signature feature of target MRCALL of the target mobile terminal — 602

↓

The network device performs dimension reduction on the signature feature of the target MRCALL — 603

↓

The network device obtains a target round test signature feature — 604

↓

The network device determines a vertical positioning model — 605

↓

The network device obtains vertical information of the target mobile terminal — 606

FIG. 6

| Determining unit — 701 | Obtaining unit — 702 | Construction unit — 703 |

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3054310 A1

- US 8165599 B1